Europäisches Patentamt

European Patent Office

Office européen des brevets

(19)

(11) Numéro de publication: **0 321 320 B1**

(12) **FASCICULE DE BREVET EUROPEEN**

(45) Date de publication du fascicule du brevet:
19.12.90

(51) Int. Cl.⁵: **F23R 3/08**

(21) Numéro de dépôt: 88402927.3

(22) Date de dépôt: 23.11.88

(54) **Chambre de combustion pour turbomachine possédant un convergent à doubles parois.**

(30) Priorité: 16.12.87 FR 8717546

(43) Date de publication de la demande:
21.06.89 Bulletin 89/25

(45) Mention de la délivrance du brevet:
19.12.90 Bulletin 90/51

(84) Etats contractants désignés:
DE FR GB IT

(56) Documents cités:
EP-A- 0 248 731
DE-A- 1 957 147
FR-A- 2 567 250
FR-A- 2 579 724
US-A- 2 813 397
US-A- 4 232 527
US-A- 4 628 694

(73) Titulaire: SOCIETE NATIONALE D'ETUDE ET DE
CONSTRUCTION DE MOTEURS D'AVIATION,
"S.N.E.C.M.A.", 2, boulevard du Général Martial Valin,
F-75015 Paris(FR)

(72) Inventeur: Commaret, Patrice, Allée de la Montagne,
F-77350 Le Mée Sur Seine(FR)
Inventeur: Desaulty, Michel André Albert, 2, rue de la
Pierre Décollée, F-77240 Vert Saint Denis(FR)
Inventeur: Hernandez, Didier Hippolyte, 4, rue du
Chemin des Moques Tonneaux, F-91540 Ormoy(FR)
Inventeur: Laugeois, Jean-Claude, 160Bis, rue de Paris,
F-94220 Charenton le Pont(FR)
Inventeur: Mandet, Gérard Marcel François, 37, rue du
Montceau, F-77133 Fericy(FR)
Inventeur: Martinez, Rodolphe, 14, Chemin de l'Osier,
F-94520 Périgny s/Yerres(FR)

(74) Mandataire: Moinat, François et al, S.N.E.C.M.A. Service
des Brevets Boîte Postale 81, F-91003 Evry Cédex(FR)

**Description**

La présente invention concerne les chambres de combustion pour turboréacteurs d'aviation.

Il est connu que la puissance développée par une turbomachine est directement liée à la température d'entrée turbine et pour augmenter la puissance les constructeurs créent des chambres de combustion dont la température devant turbine avoisine, voire dépasse 1800°K. D'autre part, la consommation spécifique d'une turbomachine, très élevée à ces températures de travail, décroît lorsque le taux de compression augmente et pour ne pas obérer ce paramètre, les moteurs actuels voient donc leur taux de compression augmenter. Ces différentes considérations ont amené à créer des chambres de combustion comportant sur tout ou partie de leurs surfaces interne et externe des doubles parois de façon à améliorer la protection thermique des viroles constituant la chambre afin d'en augmenter la longévité.

La présente invention se rapporte à une chambre de combustion, qui comporte de façon connue une zone primaire (où se réalise l'inflammation du mélange air-carburant), une zone de dilution (où l'on apporte de l'air depuis l'extérieur de la chambre que l'on mélange aux gaz chauds de la chambre) et une zone aval en forme de convergent destinée à augmenter la vitesse des gaz en sortie de chambre tout en homogénéisant la température de sortie des gaz. Dans des chambres de ce type, l'invention prévoit le cas où, seule la partie aval, ou convergent, comporte une double paroi.

Il est connu dans des chambres de ce type d'accrocher la paroi chaude, en amont et en aval par des languettes annulaires venant se loger dans des rainures annulaires de la paroi froide tandis que cette dernière, structurelle, est vissée par une bride radiale sur le distributeur de turbine disposé en aval de la chambre de combustion. Les documents FR-A 2 567 250 et FR-A 2 579 724 en illustrent des exemples.

La présente invention vise à trouver une alternative à ce type de montage évitant le vissage de la paroi froide sur le distributeur tout en améliorant le refroidissement des parois du convergent.

L'invention a donc pour objet une chambre de combustion annulaire pour turbomachine, comportant de façon connue une zone primaire, une zone de dilution et un convergent aval, ledit convergent comportant une paroi froide structurelle à l'intérieur de laquelle est disposée une paroi chaude dont le bord amont est accroché dans une rainure annulaire de la paroi froide. Selon l'invention, les bords aval des parois chaude et froide comportent chacun une bride radiale en appui l'une contre l'autre, lesdites brides étant solidarisées entre elles par des pions cylindriques coopérant avec des perçages axiaux desdites brides. De plus les brides radiales sont maintenues en appui l'une contre l'autre par des étriers à section en U dont les branches d'orientation radiale viennent chevaucher lesdites brides. En outre, les étriers comportent une fente annulaire d'orientation longitudinale ouverte vers l'aval coopérant avec les viroles interne et externe du distributeur de turbine pour assurer l'accrochage aval de la chambre avec le distributeur.

D'autres caractéristiques seront précisées dans le complément de description qui va suivre, accompagné de planches parmi lesquelles:

– la figure 1 représente vue en demi-coupe longitudinale les parois d'une chambre de combustion annulaire accrochée en aval au distributeur de turbine qui la suit;

- la figure 2 est, agrandie, le détail A de la figure 1 ;

- la figure 3 en est une première variante de réalisation;

- la figure 4 en est une seconde variante de réalisation.

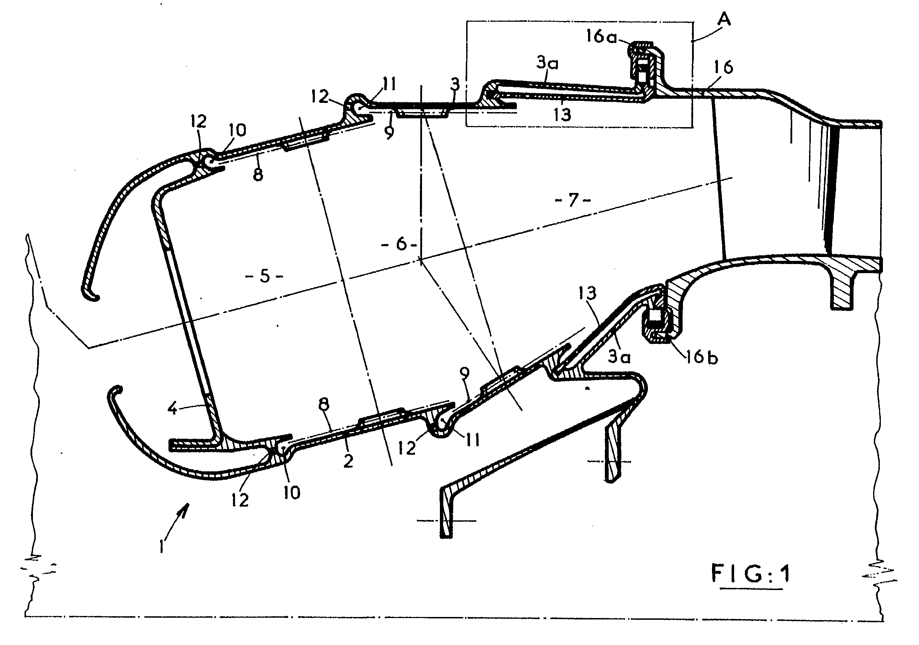

A la figure 1, on a représenté en demi-coupe longitudinale une chambre de combustion annulaire 1 comprenant des parois annulaires interne et externe reliées entre elles par une paroi radiale de fond de chambre 4 sur laquelle est fixé un dispositif d'injection non représenté. Ces parois délimitent un espace annulaire dont la partie amont 5 constitue la zone primaire, la paroi centrale constitue la zone de dilution 6 et la partie aval constitue le convergent 7 de sortie de chambre.

Au niveau des zones primaires et de dilution des films pariétaux de refroidissement 8, 9 sont réalisés à partir de chambres annulaires 10, 11 alimentées en air extérieur à la chambre par des orifices 12.

Au niveau du convergent 7, où les viroles externes formant les parois sont très sollicitées en raison des conditions de pression et de vitesse des gaz chauds, les parois sont réalisées en structure double, une peau chaude ou paroi chaude 13 étant disposée à l'intérieur de la paroi structurelle froide 3a afin de protéger cette dernière.

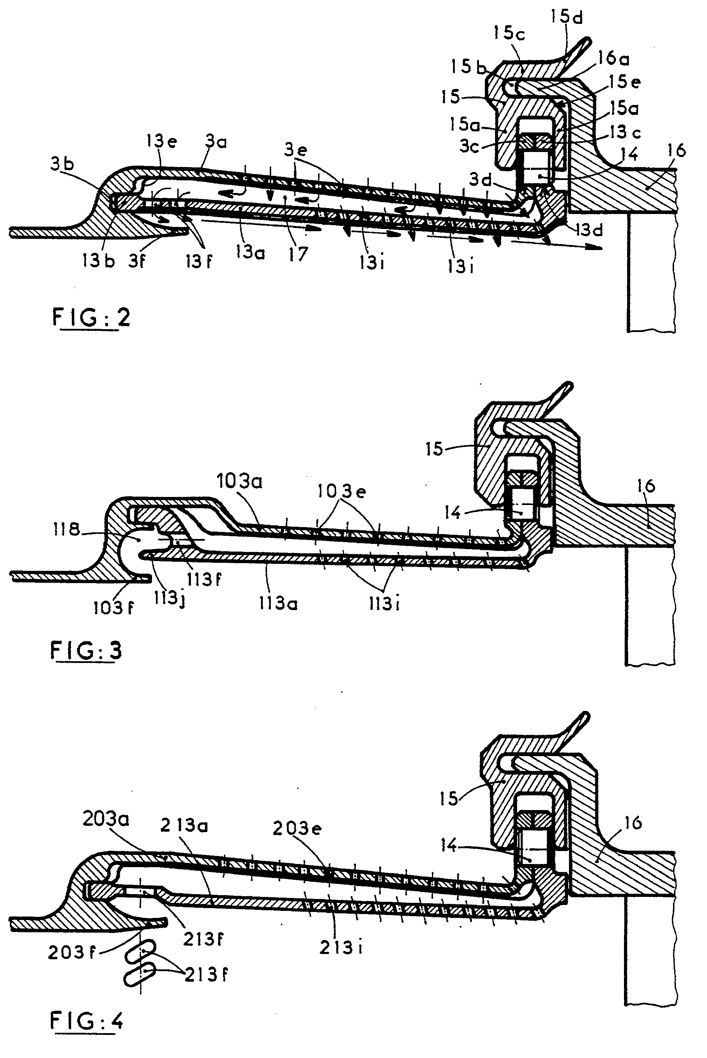

Les explications suivantes seront données pour une paroi externe de chambre, dont des exemples sont montrés aux figures 2 à 4 mais sont bien évidemment applicables aux parois internes, par simple symétrie de langage.

Dans le mode de réalisation des figures 1 et 2, la virole 3a constituant la paroi froide comporte en amont du convergent une rainure annulaire 3b et une languette interne orientée vers l'aval 3c pour la formation d'un flux pariétal de refroidissement par convection de la surface interne de la paroi chaude 13. Cette dernière est sectorisée en tuiles 13a dont le bord amont 13b vient s'engager dans la rainure annulaire 3b tandis que le bord aval est replié vers l'extérieur formant une bride radiale 13c qui vient s'appuyer sur un repli radial similaire 3c de la paroi froide 3a. Des perçages 3d, 13d coaxiaux sont réalisés dans les brides radiales 3c, 13c, et dans ces perçages sont disposés des pions cylindriques 14 permettant le positionnement des tuiles 13a et leur solidarisation sur la virole 3a.

Les brides radiales 3c, 13c sont maintenues en appui par un étrier 15 dont les branches 15a d'orientation radiale viennent les chevaucher avec un jeu radial permettant la libre dilatation des parois du convergent de la chambre.

L'étrier 15 de forme annulaire peut être divisé en deux secteurs semi-circulaires ou en un plus grand nombre de secteurs chevauchant plusieurs tuiles.

Sur la face radiale externe des étriers 15 est réalisée une fente annulaire 15b d'orientation longitudinale ouverte vers l'aval permettant l'accrochage aval de la chambre de combustion sur des brides 16a, 16b du distributeur de turbine 16.

La languette 15c de l'étrier 15 formant la fente 15b, a une extrémité évasée pour réaliser avec un chanfrein 15e une entrée tronconique de guidage de la bride 16a lors du positionnement de la chambre sur le distributeur de turbine.

Le refroidissement de la paroi chaude du convergent est assuré par plusieurs moyens. Tout d'abord la paroi froide 3a comporte sur ses deux tiers aval des multiperforations 3e d'entrée d'air pour le refroidissement par impact de la surface externe de la paroi chaude 13a. L'air ainsi admis dans la cavité inter-parois 17 est guidé par des pontets longitudinaux 13e en appui radial sur la partie amont de la paroi structurale froide et qui bordent latéralement un côté de chaque tuile afin de faire remonter l'air de refroidissement à contre-courant vers des orifices d'évacuation 13f situés à l'amont des tuiles 13a et destinés à alimenter, (après guidage par une languette annulaire interne 3f de la paroi structurale 3) un film pariétal refroidissant par convection les tuiles 13a.

La moitié aval des tuiles 13a comporte également des multiperforations 13i en quinconce avec celles 3e de la paroi froide et qui permettent de réduire le cisaillement des jets dimpact et d'améliorer l'efficacité globale du refroidissement en venant renforcer le film pariétal intérieur.

Sur les figures suivantes, les parties équivalentes portent des références identiques augmentées du chiffre 100 (resp.200).

La variante de la figure 3 ne diffère de la réalisation précédente que par la forme de la cavité dé formation du film pariétal.

Dans cette variante la tuile 113a comporte une languette amont 113j réalisant avec la languette 103f de la paroi structurale une chambre 118 à inversion de sens pour la formation du film pariétal, la chambre 118 étant alimentée depuis la cavité inter-parois par des orifices longitudinaux 113f.

La variante de la figure 4 ne diffère de la réalisation de la figure 2 que par la forme des orifices d'évacuation 213f qui ont une section oblongue et inclinée latéralement par rapport à l'axe longitudinal de la tuile afin d'assurer une meilleure répartition de l'air de refroidissement sur la languette 203f et d'éviter des sillages chauds dans le film de refroidissement.

La structure du convergent de chambre ainsi réalisé permet d'améliorer le refroidissement des parois de cet endroit critique de la chambre tout en simplifiant le montage de la chambre sur le distributeur de turbine situé en aval, ce qui diminue les temps de montage et les coûts d'entretien.

**Revendications**

1. Chambre de combustion annulaire pour turbomachines, comportant de façon connue une zone primaire (5), une zone de dilution (6), et un convergent aval (7), ledit convergent comportant une paroi froide structurelle (3a) à l'intérieur de laquelle est disposée une paroi chaude (13) dont le bord amont est accroché dans une rainure annulaire (3b) de la paroi froide (3a), caractérisé en ce que les bords aval des parois chaude et froide comportent chacun une bride radiale (3c, 13c) en appui l'une contre l'autre, lesdites brides étant solidarisées entre elles par des pions cylindriques (14) coopérant avec des perçages axiaux (3d, 13d) desdites brides, en ce que lesdites brides radiales sont maintenues en appui l'une contre l'autre par des étriers (15) à section en U dont les branches (15a) d'orientation radiale viennent chevaucher lesdites brides, et en ce que les étriers (15) comportent une fente annulaire (15b) d'orientation longitudinale ouverte vers l'aval coopérant avec les viroles interne (16b) et externe (16a) du distributeur de turbine (16) pour assurer l'accrochage aval de la chambre avec le distributeur.

2. Chambre de combustion selon la revendication 1, caractérisée en ce que les brides radiales (3c, 13c) des parois chaude et froide sont montées avec jeu radial à l'intérieur des étriers (15).

3. Chambre de combustion selon l'une quelconque des revendications 1 ou 2 caractérisée en ce que la paroi chaude est constituée de tuiles sectorisées (13a) comportant sur un de leurs bords latéraux un pontet longitudinal (13c) en appui radial sur la partie amont de la paroi froide du convergent.

4. Chambre de combustion selon la revendication 3 caractérisée en ce que l'aval de la paroi froide du convergent comporte des multiperforations (3e) d'entrée d'air pour le refroidissement par impact de la paroi chaude et en ce que des orifices d'évacuation (13f, 113f, 213f) sont réalisés sur la partie amont des tuiles (13a, 113a, 213a) de la paroi chaude, pour l'air de refroidissement ayant circulé par convection à contre-courant entre les parois chaude et froide.

5. Chambre de combustion selon la revendication 4, caractérisée en ce que la paroi froide comporte à l'amont du convergent une languette interne (3f, 103f, 203f) pour la formation d'un film pariétal de refroidissement, ledit film étant alimenté et ladite languette refroidie par les orifices d'évacuation (13f, 113f, 213f) des tuiles.

6. Chambre de combustion selon la revendication 5, caractérisée en ce que ledit film pariétal est renforcé en aval par de l'air issu de multiperforations (13i, 113i, 213i) réalisées sur la moitié aval des tuiles de la paroi chaude en quinconce avec les multiperforations (3e, 103e, 203e) de la paroi froide.

**Patentansprüche**

1. Ringförmige Brennkammer für Turbomaschinen mit einer Primärzone (5), einer Verdünnungszone (6) und einer stromabwärtigen Konvergenzzone (7) mit einer strukturellen kalten Wand (3a), innerhalb derer sich eine heiße Wand (13) befindet, deren stromaufwärtiger Rand in eine ringförmige Nut (13b) der kalten Wand (3a) eingehakt ist, dadurch gekennzeichnet,
daß die stromabwärtigen Ränder der heißen Wand und der kalten Wand jeweils einen radialen Flansch

EP 0 321 320 B1

(3c, 13c) aufweisen,
daß diese Flansche sich aufeinander abstützen und durch zylindrische Stifte (14) positioniert sind, wobei diese zylindrischen Stifte mit axialen Bohrungen (3d, 13d) der Flansche zusammenwirken,
daß die radialen Flansche durch Bügel (15) mit U-förmigem Querschnitt gegeneinander gehalten werden, deren in radialer Richtung weisende Schenkel (15a) rittlings über den Flanschen angeordnet sind, und
daß die Bügel (15) einen in Längsrichtung weisenden zur stromabwärtigen Seite hin offenen ringförmigen Schlitz (15b) besitzen, die mit den inneren (16b) und äußeren (16a) Mantelringen des Turbinen-Leitapparats (16) zusammenwirken, um die stromabwärtige Verbindung der Brennkammer mit dem Turbinen-Leitapparat zu sichern.

2. Brennkammer nach Anspruch 1, dadurch gekennzeichnet, daß die radialen Flansche (3c, 13c) der heißen bzw. der kalten Wand mit radialem Spiel in den Bügeln (15) montiert sind.

3. Brennkammer nach einem der Ansprüche 1 oder 2, dadurch gekennzeichnet, daß die heiße Wand aus sektorierten Platten (13a) besteht, die an einem ihrer seitlichen Ränder eine longitudinale Klammer (13c) haben, die sich radial auf dem stromaufwärtigen Teil der kalten Wand der Konvergenzzone abstützt.

4. Brennkammer nach Anspruch 3, dadurch gekennzeichnet, daß die stromabwärtige Seite der kalten Wand der Konvergenzzone eine Mehrzahl von Öffnungen (3e) für den Eintritt von Luft zur Aufprall-Kühlung der heißen Wand aufweist und daß an dem stromaufwärtigen Teil der Platten (13a, 113a, 213a) der heißen Wand Auslaßöffnungen (13f, 113f, 213f) vorgesehen sind, durch die die Kühlluft nach ihrer durch Konvektion bewirkten Zirkulation im Gegenstrom zwischen der heißen und der kalten Wand austritt.

5. Brennkammer nach Anspruch 4, dadurch gekennzeichnet, daß die kalte Wand auf der stromaufwärtigen Seite der Konvergenzzone eine innere Zunge (3f, 103f, 203f) zur Bildung eines Kühlfilms an der Wandung aufweist, wobei die Speisung dieses Films und die Kühlung der Zunge durch die Auslaßöffnungen (13f, 113f, 213f) der Platten erfolgt.

6. Brennkammer nach Anspruch s, dadurch gekennzeichnet, daß der Film an der Wandung stromabwärts durch Luft verstärkt wird, die von einer Mehrzahl von Öffnungen (13e, 113e, 213e) abgeleitet wird, die auf der stromabwärtigen Hälfte der Platten der heißen Wand in versetztem Wechsel mit der Mehrzahl von Öffnungen (3e, 103e, 203e) der kalten Wand angeordnet sind.

**Claims**

1. Annular combustion chamber for gas turbine engines, comprising in known fashion a primary zone (5), a dilution zone (6) and a downstream convergent section (7), the said convergent section comprising a cold structural wall (3a) inside which is placed a hot wall (13) of which the upstream edge is fixed into an annular slot (3b) in the cold wall (3a), characterised in that the downstream edges of the hot and cold walls each comprise a radial flange (3c, 13c) bearing one against the other, the said flanges being fastened together by cylindrical slugs (14) fitting into axial holes (3d, 13d) in the said flanges, in that the said radial flanges are maintained against one another by U-shaped stirrups (15) of which the radially orientated arms (15a) straddle the said flanges, and in that the stirrups (15) comprise an annular groove (15b) orientated longitudinally and open towards the rear working in conjunction with the inner (16b) and outer (16a) shells of the turbine nozzle box (16) to provide the downstream points fastening the chamber to the nozzle box.

2. Combustion chamber in accordance with Claim 1, characterised in that the radial flanges (3c, 13c) of the hot and cold walls are fitted with a radial clearance inside the stirrups (15).

3. Combustion chamber in accordance with either of Claims 1 or 2, characterised in that the hot wall is constituted by tiles divided into sectors (13a) comprising on one of their lateral edges a longitudinal rib (13c) bearing radially against the upstream part of the cold wall of the convergent section.

4. Combustion chamber in accordance with Claim 3, characterised in that the downstream part of the convergent section comprises multiple perforations (3a) for the admission of air for the cooling by impact of the hot wall and in that exit holes (13f, 113f, 213f) are made in the upsteram part of the tiles (13a, 113a, 213a) of the hot wall for the cooling air having circulated by convection between the hot and cold walls and in the opposite direction of flow.

5. Combustion chamber in accordance with Claim 4, characterised in that the cold wall comprises upstream of the convergent section an inner tongue (3f, 103f, 203f) in order to create a boundary layer of cooling air, the said boundary layer being supplied, and the said tongue cooled, by the exit holes (13f, 113f, 213f) in the tiles.

6. Combustion chamber in accordance with Claim 5, characterised in that the said boundary layer is reinforced downstream by the air emerging from the multiple perforations (13i, 113i, 213i) made in the downstream half of the tiles of the hot wall and staggered in relation to the multiple perforations (3e, 103e, 203e) in the cold wall.

4

FIG:1

EP 0 321 320 B1

FIG:2

FIG:3

FIG:4